(19) Europäisches Patentamt
European Patent Office
Office européen des brevets

(11) Publication number: 0 281 911 A2

(12) EUROPEAN PATENT APPLICATION

(21) Application number: 88103129.8

(51) Int. Cl.4: A01N 41/08, A01N 25/22

(22) Date of filing: 02.03.88

(30) Priority: 04.03.87 JP 50874/87

(43) Date of publication of application: 14.09.88 Bulletin 88/37

(84) Designated Contracting States: AT DE ES FR GB IT

(71) Applicant: Takeda Chemical Industries, Ltd.
27, Doshomachi 2-chome Higashi-ku
Osaka-shi Osaka, 541(JP)

(72) Inventor: Tanabayashi, Chikara
A-301, 50 Camadaminami Suita
Osaka 565(JP)
Inventor: Sawamura, Masatoshi
A-101, 50 Yamadaminami Suita
Osaka 565(JP)
Inventor: Kawakami, Takeshi
45-3, Daiwahigashi 5-chome
Kawanishi Hyogo 666-01(JP)

(74) Representative: von Kreisler, Alek et al
Patentanwälte Von Kreisler-Selting-Werner
Deichmannhaus am Hauptbahnhof
D-5000 Köln 1(DE)

# (54) Stabilized composition.

(57) The present invention relates to a stabilized solid composition which comprises S,S'-[2-(dimethylamino)-trimethylene] bis-benzenethiosulfonate and at least one acid selected from the class consisting of hydrochloric acid, hydrobromic acid, phosphoric acid, sulfuric acid, arenesulfonic acid, dichloroacetic acid and oxalic acid, and this invention also relates to a method for the production of the above mentioned solid composition.

The composition according to the present invention is used as an insecticide for agricultural use.

EP 0 281 911 A2

## Stabilized composition

The present invention relates to a stabilized solid composition which comprises S,S'-[2-(dimethylamino)-trimethylene] bis-benzenethiosulfonate. More particularly, the present invention relates to a stabilized solid composition which comprises S,S'-[2-(dimethylamino)trimethylene] bis-benzenethiosulfonate and at least one acid selected from the class consisting of hydrochloric acid, hydrobromic acid, phosphoric acid, sulfuric acid, arenesulfonic acid, dichloroacetic acid and oxalic acid.

The composition of the present invention is used as an insecticide for agricultural use.

S,S'-[2-(dimethylamino)trimethylene] bis-benzenethiosulfonate[generic name: bensultap, tradename: Ruban; hereinafter referred to as bensultap] is represented by the formula:

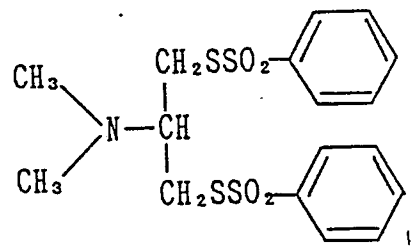

which is an insecticide for agricultural use. It shows excellent pest-controlling effects (for erxample, in British Patent No. 1264207 and Japanese Patent Publication No. 18847/70), which is of low toxicity to man, animals, fish and natural enemies to pests.

Hitherto, bensultap has been used in the form of conventional solid preparations, for example, dusts, granules or wettable powders as prepared by mixing with carriers or diluents such as mineral powders.

However, bensultap is unstable in those conventional solid preparations obtained by mixing bensultap with a carrier or diluent e.g. mineral powders according to the conventional methods. For example, when the solid preparations containing bensultap are stored at room temperature, bensultap gradually decomposes, deteriorates, changes the color and degrades. This leads to a decreased content of bensultap in the preparations.

Also, in mixed solid composition obtained by mixing bensultap with one or more agricultural chemicals for the purpose of producing broader and better effects as well as saving time and labor according to the conventional method, the effective ingredients, such as bensultap in some instances, decompose and degrade more rapidly than solid preparations containing bensultap alone as the effective ingredient.

The present inventors have unexpectedly found that among various acids, hydrochloric acid, hydrobromic acid, phosphoric acid, sufuric acid, arenesulfonic acid, dichloroacetic acid and oxalic acid specifically exert a stabilizing effect on the effective ingredients, particularly bensultap in the solid compositions, althopugh other acids e.g. tirchloracetic acid or monochloroacetic acid do not exert the stabilizing effect.

The present inventors have also unexpectedly found that the composition of the present invention can be used for the prevention of plant damage by pests without substantial phytotoxicity and in which the decomposition of bensultap is suppressed, i.e. bensultap is stabilized, for a prolonged period of storage. Furthermore, agricultural chemicals, e.g. ethofenprox, tricyclazole, probenazole, O-sec-butylphenyl N-methylcarbamate or o-cumenyl N-methylcarbamate which could not be combined with bensultap so far now can be incorporated into the composition. Besides, in the solid composition of the present invention the effective ingredients take durable effect after applying or spraying. The solid composition of the present invention can easily be produced on an industrial scale.

The stabilizing agents, such as hydrochloric acid, hydrobromic acid, phosphoric acid, sulfuric acid, arenesulfonic acid, dichloroacetic acid and oxalic acid are used singly or as a mixture of the two or more species. Among them dichloroacetic acid, hydrochloric acid and a combination of hydrochloric acid and phosphoric acid are preferred.

The stabilized solid composition of the present invention is not harmful to man and animals as well, and can be used safely.

The solid composition of the present invention can be prepared by intermingling or compounding bensultap with at least one hydrochloric acid, hydrobromic acid, phosphoric acid, sulfuric acid, arenesulfonic acid, dichloroacetic acid, oxalic acid, and, if necessary, an appropriate solid carrier or diluent, or adsorbing

bensultap and said acid with a solid carrier or diluent. The solid composition of the present invention is used in preparations, such as dusts, dusts driftless (c.f. Journal of Pesticide Science, 7, 403 to 408 (1982); hereinafter referred to as dusts DL), wettable powders, granules and micro-granules fine (c.f. Journal of Pesticide Science, 7, 403 to 408 (1982); hereinafter referred to as micro-granules F).

These preparations can be prepared according to the conventional method, for example, by mixing above-mentioned and below-mentioned ingredients.

In addition to the bensultap and the above-mentioned acid, the composition of the present invention may additionally include other effective ingredients and auxiliary components, such as dispersants, spreading agents, penetrants, wetting agents, thickening agents, caking inhibitors, coagulants, binders or antioxidants.

In the stabilizing agents, the term "phosphoric acid" means any acid derived from diphosphorus pentoxide by hydration and thus includes orthophosphoric acid, preferably having a concentration of about 1% by weight or more, metaphosphoric acid, pyrophosphoric acid, tripolyphosphoric acid and tetrapolyphosphoric acid, among others.

Examples of the arenesulfonic acid are $C_{6-18}$ arenesulfonic acids, such as benzenesulfonic acid or p-toluenesulfonic acid.

The amount of hydrochloric acid (in terms of HCl), hydrobromic acid (in terms of HBr), phosphoric acid (in terms of $H_3PO_4$), sulfuric acid (in terms of $H_2SO_4$), arenesulfonic acid, dichloroacetic acid and/or oxalic acid which is used in the composition of the present invention (when two or more are used, the total amount) is suitably about 0.05 to 10% by weight, desirably about 0.1 to 5% by weight, based on the whole weight of the composition.

The concentration of hydrochloric acid is preferably within the range of from about 35% by weight (concentrated hydrochloric acid) to about 0.1% by weight, that of hydrobromic acid is within the range of from about 47 to about 0.1% by weight, and that of sulfuric acid is within the range of from the concentration of concentrated sulfuric acid to about 0.1% by weight.

Such hydrochloric acid, hydrobromic acid, phosphoric acid or sulfuric acid which is used as the stabilizing agent, may be added as diluted with water or an organic solvent, if necessary. For example, an alcohol such as methanol or ethanol, acetone or dichloromethane, or a mixture or water and the said organic solvent my be used. These stabilizing agents may be diluted about 2 to 20 fold by weight (where two or more different stabilizers are used in combination, in terms of the total amount). On the other hand, said arenesulfonic acid, dichloroacetic acid or oxalic acid may be pulverized prior to use, or be dissolved or suspended in said organic solvent or said water-organic solvent mixture prior to use.

The content of bensultap in the composition of the present invention is suitably within the range of about 0.1 to 90% by weight on the final composition basis. More specifically, said content is suitable within the range of about 0.1 to 10% by weight in case of dusts or dusts DL, about 1 to 10% by weight in case of granules or micro-granules F, and about 10 to 90% by weight in case of wettable powders.

Preferable examples of the solid carrier or diluent include mineral powders, such as clays (e.g. kaolin, bentonite, acid clay or finely divided clay), talcs (e.g. pulverized talc or pulverized pyrophyllite) or silicas (e.g. diatomaceous earth, pulverized mica or white carbon), plant or vegetable powders, such as soybean flour, tabacco powders, wheat flour or wood flour, calcium cabonate, sulfur powder and activated carbon. These may be used alone or as a mixture of two or more species.

Surfactants may be used as dispersants, spreading agents or penetrants. Examples of the surfactants include nonionic and anionic surfactants, such as soaps, polyoxyethylene alkyl aryl ethers (e.g. Neugen EA-142®, Daiichi Kogyo Seiyaku K.K.), polyoxyethylene alkyl aryl esters (e.g. Nonal® Toho Kagaku K.K.), alkyl sulfates (e.g. Emal 10® Kao Soap K.K.), alkylsulfonates (e.g. Neogen® or Neogen T®, Daiichi Kogyo Seiyaku K.K.; Neopelex®, Kao Soap K.K.), polyethylene glycol ethers (e.g. Nonipol 85®, Nonipol 100® or Nonipol 160®, Sanyo Chemical Industries K.K.) and polyhydric alcohol esters (e.g. Tween 20® or Tween 80®, Kao Soap K.K.).

Usable as caking inhibitors are, for example, white carbon, talc, diatomaceous earth and magnesium stearate. Usable as coagulants are, for example, liquid paraffin, ethylene glycol, diethylene glycol and triethylene glycol. Usable as binders are, for example, carboxymethylcellulose sodium salt, dextrin, α-form starch and polyvinyl alcohol.

Examples of the antioxidant include dibutylhydroxytoluene, 4,4-thiobis-6-tert-butyl-3-methylphenol, butylhydroxyanisol, p-octylphenol, mono-(or di-or tri-)(α-methylbenzyl)phenol, 2,6-di-tert-butyl-4-methylphenol and pentaerythrytyl-tetrakis[3-(3,5-di-t-butyl-4-hydroxyphenyl)] propionate.

The composition of the present invention may include, in addition to bensultap, one or more of effective ingredients, for example fungicides, such as organosulfur, organophosphorus, organoarsenic or organochlorine fungicides, insecticides, such as organophosphorus, organochlorine, carbamate or pyrethroid insecticides, and various antibiotics.

Among these, preferred are followings.

The generic name or abbreviation is given in the parentheses following chemical name in the case that the chemicals name is described. The generic name or abbreviation may be used hereinafter in some instances.

Organosulfur fungicides

zinc ethylenebis(dithiocarbamate) (zineb), manganese ethylenebis(dithiocarbamate) (maneb),

Organophosphorus fungicides

S-benzyl diisopropyl phosphorothiolate (IBP), O-ethyl diphenyl phosphorodithiolate (EDDP),

Organoarsenic fungicides

ferric methanearsonate (MAF), ammonium salt of ferric methanearsonate (MAFA)

Organochlorine fungicide

pentachlorophenol (PCP), tetrachloroisophthalonitrile (TPN), 4,5,6,7-tetrachlorophthalide (phthalide)

Other fungicides

5-methyl-1,2,4-triazolo[3,4-b]benzothiazole (tricyclazole), 3-allyloxy-1,2-benzisothiazole 1,1-dioxide (probenazole)

Organophosphoric insecticides

dimethyl 4-nitro-m-tolyl phosphorothionate (MEP), S-1,2-bis(ethoxycarbonyl)ethyl dimethyl phosphorothiolothionate (malathon), p-cyanophenyl dimethyl phosphorothionate (CYAP)

Organochlorine insecticides

6,7,8,9,10,10-hexachloro-1,5,5a,6,9,9a-hexahydro-6,9-methano-2,4,3-benzodioxathiepine 3-oxide (benzoepin)

Carbamate insecticides

1-naphthyl methylcarbamate (NAC), m-tolyl N-methylcarbamate (MTMC), o-sec-butylphenyl N-methylcarbamate (BPMC), o-cumenyl N-methylcarbamate (MIPC), 3,4-xylyl N-methylcarbamate (MPMC), 3,5-xylyl N-methylcarbamate (XMC)

Pyrethroid insecticides

pyrethrins, allethrin, resmethrin

Antibiotics

blasticidin S, kasugamycin, polyoxin, oxytetracycline, validamycin A

Other insecticides

S,S'-[2-(dimethylamino)trimethylene] bisthiocarbamate (cartap), 2-(4-ethoxyphenyl)-2-methylpropyl 3-phenoxybenzyl ether (ethofenprox), (RS)-α-cyano-3-phenoxybenzyl (S)-2-(4-difluoromethoxyphenyl)-3-methylbutyrate (flucythrinate)

More preferable effective ingredients are validamycin A, probenazole, IBP, tricyclazole, ethofenprox, flucythrinate, NAC, MPMC, MTMC, BPMC and MIPC.

Most preferable ones are tricyclazole, ethofenprox, BPMC, MIPC and probenazole.

Preferable examples of the mixed composition of the present invention include a mixture of bensultap and tricyclazole (or/and ethofenprox).

Other effecive ingredients than bensultap in the solid composition of the present invention may be used in an amount of about 0.01 to 20% by weight, preferably about 0.05 to 10% by weight, per weight of the whole composition in the case that one species of the additional effective ingredient is used, and about 0.01 to 20% by weight, preferably about 0.05 to 15% by weight, on the sum total basis per weight of the whole composition in the case that two or more species are used.

In the case that the effective ingredient (e.g. ethofenprox) is liquid or melts at the neighbourhood of room temperature, the effective ingredients may be employed as a solution or dispersion thereof in a solvent showing high-boiling point, such as phenylxylylethane, di-2-ethylhexyladiphate or 2-ethylhexyldiphenylphosphate.

The composition of the present invention may additionally contain miticides, nematocides, herbicides, plant hormones, plant growth regulators, synergists, attractants, repellents, colorants or fertilizers, which are conventional to those skilled in the art.

In the composition of the present invention, wettable powders are diluted with water prior to use, to an appropriate extent, about 30 to 4,000 fold, preferably about 300 to 3,000 fold, and then applied. The wettable powders are preferably used after dilution to a bensultap concentration of about 50 to 1,000 ppm.

In the case that the composition of the present invention is used as an insecticide for agricultural use, bensultap in the composition is preferably used in an amount of about 30 g to about 500 g per 10 ares. The composition of the present invention is directly sprayed onto stems and leaves or applied to plant roots. Thus, treatment can be made by per se known methods. When timely sprayed onto or applied to rice, vegetables (e.g. cabbage, Chinese cabbage, Japanese radish, cucumber or potato), fruit trees (e.g. mandarin orange or pear), tea and tobacco, the composition of the present invention can control or eradicate various pests thereon, for example lepidopterous pests, such as rice stem borer, grass leaf roller, riceplant skipper, European corn borer, armyworm, cabbage butterfly, diamondback moth, cabbage armyworm, beet semi-looper, cabbage webworm, crucifer caterpillar, oriental tobacco budworm or tea leaf roller, coleopterous pests, such as rice leaf beetle or melon beetle, hemipterous pests, such as green rice leafhopper or smaller green leafhopper, thysanopterous pests, such as yellow tea thrips, dipterous pests, such as rice leaf miner. Furthermore, it is feasible to prevent the breeding of various pests for a prolonged period by spraying or applying the composition in advance.

The composition of the present invention can be prepared by per se known methods, as shown hereinabove and, more in detail, following Examples.

[Effects of the Invention]

The Reference Examples, Examples and Test Examples given hereinbelow illustrate the invention in further detail. In the Examples "%" and "part(s)" means % by weight and "part(s) by weight" respectively, unless otherwise specified.

Reference Example 1 Dusts DL

To 93.0 parts of finely divided clay, are added 2.2 parts of bensultap, 1.1 parts of tricyclazole, 1.2 parts of a 50% solution of ethofenprox in phenylxylylethane (hereinafter referred to as high-boiling solvent), 2.2 parts of white carbon and 0.3 part of liquid paraffin (Doriless C®, hereinafter referred to as Doriless C), followed by thorough blending in a mixer grinder. The resultant mixture is further processed in a flash mixer to give dusts DL of a bensultap-tricyclazole-ethofenprox.

Reference Example 2 Granules

A mixture weighing 100 parts is prepared by blending 4 parts of bensultap, 6 parts of dextrin, 2 parts of Nonipol 85® (Sanyo Chemical Industries K.K., hereinafter referred to as surfactant) and clay (the balance). After thorough blending of the mixture, 12 parts of water is added to it, followed by kneading. The kneaded mixture is granulated by means of an extruder granulator (screen mesh diameter: 1.0 mm). The wet granulation product obtained is dried and sifted to give a mass of granules 10 to 32 mesh in size.

Reference Example 3 Granules

A mixture weighing 100 parts is prepared by blending 4 parts of bensultap, 1.5 parts of ethofenprox, 6 parts of dextrin, 2 parts of surfactant and clay (the balance). After thorough blending of the mixture, 12 parts of water is added, followed by kneading. The kneaded mixture is granulated by means of an extruder granulator (screen mesh diameter: 1.0 mm). The wet granulation product obtained is dried and sifted to give a mass of granules 10 to 32 mesh in size.

Reference Example 4 Granules

A mixture weighing 100 parts is prepared by blending 4 parts of bensultap, 6 parts of dextrin, 2.3 parts of trichloroacetic acid, 2 parts of surfactant and clay (the balance). After thorough blending of the mixture, 12 parts of water is added, followed by kneading. The kneaded mixture is granulated by means of an extruder granulator (screen mesh diameter: 1.0 mm). The wet granulation product obtained is dried and sifted to give a mass of granules 10 to 32 mesh in size.

Reference Example 5 Granules

A mixture weighing 100 parts is prepared by blending 4 parts of bensultap, 6 parts of dextrin, 1.5 parts of monochloroacetic acid, 2 parts of surfactant and clay (the balance). After thorough blending of the mixture, 12 parts of water is added to it, followed by kneading. The kneaded mixture is granulated by means of an extruder granulator (screen mesh diameter: 1.0 mm). The wet granulation product obtained is dried and sifted to give a mass of granules 10 to 32 mesh in size.

Reference Example 6 Wettable powders

To 69.5 parts of clay for wettable powders, are added 10.5 parts of bensultap, 11.0 parts of a 50% solution of ethofenprox in high-boiling solvent, 5.0 parts of white carbon and 4.0 parts of surfactant, followed by thorough blending in a mixer grinder. The resultant mixture is then comminuted in a micropulverizer to give wettable powders of bensultap-ethofenprox.

Reference Example 7 Granules

A mixture weighing 100 parts is prepared by blending 4 parts of bensultap, 4.0 parts of BPMC, 6 parts of dextrin, 2 parts of surfactant and clay (the balance). After thorough blending of the mixture, 12 parts of water is added, followed by kneading. The kneaded mixture is granulated by means of an extruder granulator (screen mesh diameter: 1.0 mm). The wet granulation product obtained is dried and sifted to give a mass of granules 10 to 32 mesh in size.

Reference Example 8 Granules

A mixture weighing 100 parts is prepared by blending 4 parts of bensultap 4.0 parts of MIPC, 6 parts of dextrin, 2 parts of surfactant and clay (the balance). After thorough blending of the mixture, 12 parts of water is added, followed by kneading. The kneaded mixture is granulated by means of an extruder granulator (screen mesh diameter: 1.0 mm). The wet granulation product obtained is dried and sifted to give a mass of granules 10 to 32 mesh in size.

Reference Example 9 Granules

A mixture weighing 100 parts is prepared by blending 4 parts of bensutap, 4.0 parts of tricyclazole, 6 parts of dextrin, 2 parts of surfactant and clay (the balance). After thorough blending of the mixture, 12 parts of water is added, followed by kneading. The kneaded mixture is granulated by means of an extruder granulator (screen mesh diameter: 1.0 mm). The wet granulation product obtained is dried and sifted to give a mass of granules 10 to 32 mesh in size.

Reference Example 10 Granules

A mixture weighing 100 parts is prepared by blending 4 parts of bensultap, 8 parts of probenazole, 6 parts of dextrin, 2 parts of surfactant and clay (the balance). After thorough blending of the mixture, 12 parts of water is added, followed by kneading. The kneaded mixture is granulated by means of an extruder granulator (screen mesh diameter: 1.0 mm). The wet granulation product obtained is dried and sifted to give a mass of

Example 1 Dusts DL

A solution of 0.7 part of concentrated (about 35%) hydrochloric acid in 1.4 parts of methanol is added to 2.2 parts of bensultap and the mixture is kneaded in a flash mixer. The kneaded mass is thoroughly dried under reduced pressure (where drying results in caking, the cake is crushed). To this dried product, are added 92.3 parts of finely divided clay, 1.1 parts of tricyclazole, 1.2 parts of a 50% solution of ethofenprox in high-boiling solvent, 2.2 parts of white carbon and 0.3 part of Doriless C, followed by thorough blending in a mixer grinder. The resultant mixture is then processed in a flash mixer to give dusts DL of bensultap-tricyclazole ethofenprox.

Example 2 Dusts DL

To 2.2 parts of bensultap are added 2.2 parts of benzenesulfonic acid and the mixture is thoroughly blended in a flash mixer. To this mixture, are added 90.8 parts of finely divided clay, 1.1 parts of tricyclazole, 1.2 parts of a 50% solution of ethofenprox in high-boiling solvent, 2.2 parts of white carbon and 0.3 part of Doriless C, followed by thorough blending in a mixer grinder. The resultant mixture is then processed in a flash mixer to give dusts DL of bensultap-tricyclazole-ethofenprox.

Example 3 Dusts DL

To 2.2 parts of bensultap are added 3.0 parts of oxalic acid and the mixture is thoroughly blended in a flash mixture. To this mixture, are added 90.0 parts of finely divided clay, 1.1 parts of tricyclazole, 1.2 parts of a 50% solution of ethofenprox in high-boiling solvent, 2.2 parts of white carbon and 0.3 part of Doriless C, followed by thorough blending in a mixer grinder. The resultant mixture is processed in a flash mixer to give dusts DL of bensultap-tricylazole-ethofenprox.

Example 4 Dusts DL

To a mixture of 2.2 parts of bensultap and 2.2 parts of white carbon is added 0.7 part of dichloroacetic acid and the mixture is thoroughly blended in a flash mixer. To this mixture, are added 92.3 parts of finely divided clay, 1.1 parts of tricyclazole, 1.2 parts of a 50% solution of ethofenprox in high-boiling solvent and 0.3 part of Doriless C, followed by thorough blending in a mixer grinder. The resultant mixture is further processed in a flash mixer to give dusts DL of bensultap-tricyclazole-ethofenprox.

Example 5 Granules

A mixture weighing 100 parts is prepared by blending 4 parts of bensultap, 6 parts of dextrin, 3 parts of oxalic acid, 2 parts of surfactant and clay (the balance). After thorough mixing, 12 parts of water is added to the mixture, followed by kneading. The kneaded mixture is granulated on an extruder granulator (screen mesh size: 1.0 mm in diameter). The wet granulation product thus obtained is dried and sifted to give a mass of granules 10 to 32 mesh in size.

Example 6 Granules

A mixture weighing 100 parts is prepared by blending 4 parts of bensultap, 1.5 parts of ethofenprox, 6 parts of dextrin, 2 parts of oxalic acid, 2 parts of surfactant and clay (the balance). After thorough blending, 12 parts of water is added to the mixture, followed by kneading. The kneaded mixture is granulated on an extruder granulator (screen mesh size: 1.0 mm in diameter). The wet granulation product thus obtained is dried and sifted to give a mass of granules 10 to 32 mesh in size.

Example 7 Granules

Four parts of bensultap, 1.5 parts of ethofenprox, 6 parts of dextrin, 2 parts of surfactant, and 86 parts of clay are weighed and mixed well. To the mixture are added 6 parts of 10% hydrochloric acid and 6 parts of water, followed by kneading. The kneaded mass is granulated on an extruder granulator (screen mesh size: 1.0 mm in diameter). The wet granulation product thus obtained is dried and sifted to give a mass of granules 10 to 32 mesh in size.

Example 8 Granules

Four parts of bensultap, 1.5 parts of ethofenprox, 6 parts of dextrin, 2 parts of surfactant, and 86 parts of clay are weighed and mixed well. To the mixture is added 11.5 parts of 7% hydrobromic acid, followed by kneading. The kneaded mass is granulated on an extruder granulator (screen mesh size: 1.0 mm in diameter). The wet granulation product thus obtained is dried and sifted to give a mass of granules 10 to 32 mesh in size.

Example 9 Granules

Four parts of bensultap, 1.5 parts of ethofenprox, 6 parts of dextrin, 2 parts of surfactant, and 85 parts of clay are weighed and mixed well. To the mixture are added 4 parts of 10% hydrochloric acid and 10 parts of 10% phosphoric acid, followed by kneading. The kneaded mass is granulated on an extruder granulator (screen mesh size: 1.0 mm in diameter). The wet granulation product thus obtained is dried and sifted to give a mass of granules 10 to 32 mesh in size.

Example 10 Granules

A mixture weighing 100 parts is prepared by blending 4 parts of bensultap, 6 parts of dextrin, 2 parts of dichloroacetic acid, 2 parts of surfactant and clay (the balance). After thorough blending, 12 parts of water is added to the mixture, followed by kneading. The kneaded mixture is granulated on an extruder granulator (screen mesh size: 1.0 mm in diameter). The wet granulation product thus obtained is dried and sifted to give a mass of granules 10 to 32 mesh in size.

Example 11 Granules

Four parts of bensultap, 1.5 parts of ethofenprox, 6 parts of dextrin, 2 parts of surfactant, and 85 parts of clay are weighed and mixed well. To the mixture are added 4 parts of 10% hydrochloric acid and 10 parts of 10% sulfuric acid, followed by kneading. The kneaded mass is granulated on an extruder granulator (screen mesh size: 1.0 mm in diameter). The wet granulation product thus obtained is dried and sifted to give a mass of granules 10 to 32 mesh in size.

Example 12 Wettable powders

A solution of 3.0 part of concentrated (about 35%) hydrochloric acid in 4.0 parts of methanol is added to 10.5 parts of bensultap and the mixture is kneaded in a mixer grinder. The kneaded mass is thoroughly dried under reduced pressure (where drying results in caking, the cake is crushed). To the dried product, are added 67.5 parts of clay for wettable powders, 11.0 parts of a 50% solution of ethofenprox in high-boiling solvent, 5.0 parts of white carbon and 4.0 parts of surfactant, followed by thorough blending in a mixer grinder. The resultant mixture is further comminuted in a micropulverizer to give wettable powders of bensultap-ethofenprox mixture.

Example 13 Granules

Four parts of bensultap, 4.0 parts of BPMC, 6 parts of dextrin, 2 parts of surfactant, and 82.6 parts of clay are weighed and mixed well. To the mixture are added 4 parts of 10% hydrochloric acid and 10 parts of 10% phosphoric acid, followed by kneading. The kneaded mass is granulated on an extruder granulator (screen mesh size: 1.0 mm in diameter). The wet granulation product thus obtained is dried and sifted to give a mass of granules 10 to 32 mesh in size.

Example 14 Granules

Four parts of bensultap, 4.0 parts of MIPC, 6 parts of dextrin, 2 parts of surfactant, and 82.6 parts of clay are weighed and mixed well. To the mixture are added 4 parts of 10% hydrochloric acid and 10 parts of 10% phosphoric acid, followed by kneading. The kneaded mass is granulated on an extruder granulator (screen mesh size: 1.0 mm in diameter). The wet granulation product thus obtained is dried and sifted to give a mass of granules 10 to 32 mesh in size.

Example 15 Granules

Four parts of bensultap, 4.0 parts of tricyclazole, 6 parts of dextrin, 2 parts of surfactant, and 82.6 parts of clay are weighed and mixed well. To the mixture are added 4 parts of 10% hydrochloric acid and 10 parts of 10% phosphoric acid, followed by kneading. The kneaded mass is granulated on an extruder granulator (screen mesh size: 1.0 mm in diameter). The wet granulation product thus obtained is dried and sifted to give a mass of granules 10 to 32 mesh in size.

Example 16 Granules

Four parts of bensultap, 8.0 parts of probenazole 6 parts of dextrin, 2 parts of surfactant, and 78.6 parts of clay are weighed and mixed well. To the mixture are added 4 parts of 10% hydrochloric acid and 10 parts of 10% phosphoric acid, followed by kneading. The kneaded mass is granulated on an extruder granulator (screen mesh size: 1.0 mm in diameter). The wet granulation product thus obtained is dried and sifted to give a mass of granules 10 to 32 mesh in size.

Example 17 Granules

Four parts of bensultap, 1.5 parts of ethofenprox, 6 parts of dextrin, 2 parts of surfactant, 0.2 parts of pentaerythrytyl-tetrakis [3-(3,5-di-tertbutyl-4-hydroxyphenyl)] propionate, and 85 parts of clay are weighed and mixed well. To the mixture are added 3.4 parts of 10% hydrochloric acid and 10 parts of 10% phosphoric acid, followed by kneading. The kneaded mass is granulated on an ectruder granulator (screen mesh size: 1.0 mm in diameter). The wet granulation product thus obtained is dried and sifted to give a mass of granules 10 to 32 mesh in size.

Example 18 Granules

Four parts of bensultap, 1.5 parts of ethofenprox, 6 parts of dextrin, 2 parts of surfactant, 0.2 parts of pentaerythrytyl-terakis [3-(3,5-di-tertbutyl-4-hydroxyphenyl)] propionate and 85 parts of clay are weighed and mixed well. To the mixture are added 2.7 parts of 10% hydrochloric acid and 10 parts of 10% phosphoric acid, followed by kneading. The kneaded mass is granulated on an extruder granulator (screen mesh size: 1.0 mm in diameter). The wet granulation product thus obtained is dried and sifted to give a mass of granules 10 to 32 mesh in size.

Test Example

The mixed preparations obtained in Examples 1 to 18 and Reference Examples 1 to 10 (20 g each) are placed in sample bottles and the bottles are closely stoppered and stored at a determined temperature for a determined period. Then, each sample is taken out, a certain quantity (100 mg in terms of bensultap) is accurately weighed and extracted with 25 ml of acetonitrile with shaking for 20 minutes. The content of bensultap in the extract is determined by high-performance liquid chromatography [column: Nucleosil 10-$C_{18}$, obtained from GasChro kogyo; eluted solvent: acetonitrile-water (60:40 v/v)]. The percent decomposition of bensultap is calculated as follows:

% Decomposition of bensultap

$$\left(1 - \frac{\text{Content of bensultap in preparation after storage at determined temperature for determined period}}{\text{Content of bensultap in preparation immediately after production}}\right) \times 100$$

The test results obtained are shown in Tables 1 to 5.

Table 1 Stability of dusts DL of bensultap-tricyclazole-ethofenprox

| Composition tested | Stabilizer (content %) | % Decomposition of bensultap | |
|---|---|---|---|
| | | 40°C/1 month | 60°C/1 week |
| Example 1 | Hydrochloric acid (0.25 in terms of HCl) | 0 | 2.7 |
| Example 2 | Benzenesulfonic acid (2.2) | 1.7 | 12.5 |
| Example 3 | Oxalic acid (3.0) | 0 | 0 |
| Example 4 | Dichloroacetic acid (0.7) | 0 | 4.0 |
| Control Reference Example 1 | None | 36.7 | 62.5 |

Table 2 Stability of granules of bensultap-tricyclazole-ethofenprox

| Composition tested | Stabilizer (content %) | % Decomposition of bensultap 40°C/1 month | % Decomposition of bensultap 60°C/2 weeks |
|---|---|---|---|
| Example 6 | Oxalic acid | 4.3 | 4.5 |
| Example 7 | Hydrochloric acid (0.6 in terms of HCl) | 0.6 | 1.2 |
| Example 8 | Hydrobromic acid (0.8 in terms of HBr) | Not measured | 9.0 |
| Example 9 | Hydrochloric acid (0.4 in terms of HCl)-phosphoric acid (1.0 in terms of $H_3PO_4$) | 1.5 | 0 |
| Example 17 | Hydrochloric acid (0.34 in terms of HCl)-sulfuric acid (1.0 in terms of $H_2SO_4$) | 1.3 | Not measured |
| Example 18 | Hydrochloric acid (0.27 in terms of HCl)-phosphoric acid (1.0 in terms of $H_3PO_4$) | 0 | Not measured |
| Example 11 | Hydrochloric acid (0.4 in terms of HCl)-sulfuric acid (1.0 in terms of $H_2SO_4$) | 1.0 | Not measured |
| Control Reference Example 3 | None | 10.3 | 43.2 |

Table 3 Stability of granules of bensultap

| Composition tested | Stabilizer (content %) | % Decomposition of bensultap | |
|---|---|---|---|
| | | 40°C/1 month | 60°C/2 weeks |
| Example 5 | Oxalic acid (3.0) | 0 | 8.0 |
| Example 10 | Dichloroacetic acid (2.0) | 3.2 | 24.9 |
| Control<br>Reference Example 2 | None | 6.6 | 75.1 |
| Reference Example 4 | Trichloroacetic acid (2.3) | Not measured | 63.3 |
| Reference Example 5 | Monochloroacetic acid (1.5) | 50.5 | 92.9 |

Table 4 Stability of wettable powders of bensultap-ethofenprox

| Composition tested | Stabilizer (content %) | % Decomposition of bensultap | |
|---|---|---|---|
| | | 40°C/1 month | 60°C/1 weeks |
| Example 12 | Hydrochloric acid (1.1 in terms of HCl) | 3.5 | 9.6 |
| Control<br>Reference Example 6 | None | 11.0 | 33.9 |

Table 5 Stability of granules of a mixed preparation of bensultap

| Composition tested | Stabilizer (content %) | % Decomposition of bensultap 40°C/2 month | 60°C/ 2 weeks |
|---|---|---|---|
| Example 13 | Hydrochloric acid (0.4 in terms of HCl)-phosphoric acid (1.0 in terms of $H_3PO_4$) | 4.2 | 5.7 |
| Control Reference Example 7 | None | 27.3 | 54.3 |
| Example 14 | Hydrochloric acid (0.4 in terms of HCl)-phosphoric acid (1.0 in terms of $H_3PO_4$) | 1.0 | 3.9 |
| Control Reference Example 9 | None | 8.5 | 26.3 |
| Example 15 | Hydrochloric acid (0.4 in terms of HCl)-phosphoric acid (1.0 in terms of $H_3PO_4$) | 1.4 | 3.9 |
| Control Reference Example 9 | None | 8.5 | 26.3 |
| Example 16 | Hydrochloric acid (0.4 in terms of HCl)-phosphoric acid (1.0 in terms of $H_3PO_4$) | 1.5 | 7.3 |
| Control Reference Example 10 | None | 12.8 | 56.5 |

The above results clearly indicate that bensultap can be markedly stabilized by mixing solid compositions containing bensultap with hydrochloric acid, hydrobromic acid, phosphoric acid, sulfuric acid, arenesulfonic acid, dichloroacetic acid or oxalic acid.

## Claims

1. A stabilized solid composition which comprises S,S'-[2-(dimethylamino)trimethylene] bis-benzenethiosulfonate and at least one acid selected from the class consisting of hydrochloric acid, hydrobromic acid, phosphoric acid, arenesulfonic acid, dichloroacetic acid and oxalic acid.

2. The composition as claimed in claim 1, wherein the acid is hydrochloric acid or phosphoric acid.

3. The composition as claimed in claim 1, wherein the phosphoric acid is selected from the class consisting of orthophosphoric acid, metaphosphoric acid, pyrophosphoric acid, tripolyphosphoric acid and tetrapolyphosphoric acid.

4. The composition as claimed in claim 1, wherein the amount of the acid is in the range of from 0.05 to 10 parts by weight per 100 parts by weight of the whole composition.

5. The composition as claimed in claim 1, wherein the composition further comprises 5-methyl-1,2,4-triazolo[3,4-b]benzothiazole, 2-(4-ethoxyphenyl)-2-methylpropyl 3-phenoxybenzyl ether, o-sec-butylphenyl N-methylcarbamate, o-cumenyl N-methylcarbamate or/and 3-allyloxy-1,2-benzisothiazole 1,1-dioxide.

6. A process for producing the composition as claimed in claim 1, whcih comprises intermingling or compounding S,S'-[2-(dimethylamino)trimethylene] bis-benzenethiosulfonate with at least one acid selected from the class consisting of hydrochloric acid, hydrobromic acid, phosphoric acid, arenesulfonic acid, dichloroacetic acid and oxalic acid.